# EUROPÄISCHE PATENTSCHRIFT

(11) **EP 0 915 130 B1**
(45) Veröffentlichungstag und Bekanntmachung des Hinweises auf die Patenterteilung: **31.05.2000**
(21) Anmeldenummer: 98116389.2
(22) Anmeldetag: 29.08.1998
(51) Int. Cl.: C08K 5/00, C08K 5/13, C08K 5/372, C08K 5/524

(54) **Alterungsschutzmittel für Co- und Terpolymere des Styrols**
Anti-ageing agent for copolymers and terpolymers of styrene
Agents anti-vieillissement pour copolymères et terpolymères de styrène

(30) Priorität: 12.11.1997 DE 19750747
(43) Veröffentlichungstag der Anmeldung: 12.05.1999
(73) Patentinhaber: Raschig GmbH, 67061 Ludwigshafen (DE)
(72) Erfinder: Asbahr, Hark-Oluf, Dr., 67061 Ludwigshafen (DE); Ullrich, Volker, Dr., 69198 Schriesheim (DE)
(74) Vertreter: Grussdorf, Jürgen, Dr.

(56) Entgegenhaltungen:
- EP-A- 0 061 160
- EP-A- 0 550 207
- EP-A- 0 625 542
- EP-A- 0 669 367
- US-A- 5 298 540

## Beschreibung

Die Erfindung betrifft Alterungsschutzmittel für Co- und Terpolymere des Styrols wie z. B. Acrylnitrilbutadienstyrol (ABS), Styrolbutadien-Blockcopolymere (SBS), Styrolisopren-Blockcopolymere (SIS), schlagzähes Polystyrol (PS-I) und Styrolacrylnitril (SAN) bestehend aus einer Mischung verschiedener Antioxidantien aus den Klassen der
a) sterisch gehinderten Phenole,
b) Thioester und
c) Phosphite,
welche geeignet ist, die Copolymeren gegen Verfärbung und Degradation, welche z. B. durch Licht, Hitze und mechanische Energie induziert sein kann, zu stabilisieren.

Bei der Verarbeitung und Herstellung von Halbfabrikaten und Endprodukten der obengenannten Thermoplaste durch Extrudieren, Spritzgießen etc. müssen den Kunststoffen Alterungsschutzmittel zugesetzt werden, um zu verhindern, daß die Kunststoffe durch die dabei auftretenden Abbauvorgänge vergilben bzw. in ihren mechanischen Eigenschaften wie Schlagzähigkeit, Versprödungsresistenz, Reißfestigkeit usw. geschädigt werden. Das gleiche gilt auch für die Lagerung und den Gebrauch der Endprodukte.

Der Abbaumechanismus ist noch nicht endgültig geklärt, jedoch wird angenommen, daß durch Energiezufuhr und Sauerstoff Radikale, insbesondere Peroxidradikale gebildet werden, welche über entsprechende Mechanismen der Kettenfortpflanzung und Kettenverzweigung den radikalischen Abbau und die Oxidation fortleiten.

Um dies zu verhindern, werden Antioxidantien zugesetzt, wobei diese in prinzipiell zwei Gruppen eingeteilt werden. Besonders wichtig sind die Radikalfänger, vorzugsweise sterisch gehinderte Phenole, welche einerseits, unter Übertragung eines Wasserstoffradikals, Radikale abfangen, wodurch sich aus dem Phenol ein stabilisiertes Phenolradikal bildet, und andererseits durch Addition dieses so gebildeten stabilisierten Phenolradikals an ein zweites Radikal, dieses zusätzlich abfangen. Diese Gruppe wird auch als primäre Antioxidantien bezeichnet. Weiterhin wichtig sind die sogenannten sekundären Antioxidantien, welche direkt Hydroperoxidgruppen unter Reduktion abbauen, ohne daß dabei erneut Radikale entstehen. Zu dieser Gruppe gehören als typische Vertreter die Phosphite und organischen Sulfide, insbesondere die Thioester (Taschenbuch der Kunststoff-Additive, 3. Ausgabe (1989)).

Häufig werden durch Kombination eines primären mit einem sekundären Antioxidans synergistische Effekte beobachtet, d.h. die Wirksamkeit der Kombination ist größer als die Summe der Einzeleffekte. Insbesondere werden Kombinationen von Thiodipropionaten mit sterisch gehinderten Phenolen oder auch von Phosphiten mit phenolischen Antioxidantien verwendet. Weiterhin ist ein Synergismus für die Kombination von schwach gehinderten und stark gehinderten Phenolen beobachtet, wobei zunächst das schwach gehinderte Phenol in die Oxidationsradikalkette durch Abfangen der Radikale eingreift, und anschließend das stärker gehinderte Phenol über eine Austauschreaktion das Radikal übernimmt und in einer langsamen Folgereaktion ein weiteres Radikal addiert (vgl. EP 0 669 367 A1). In dieser Literaturstelle ist weiterhin beschrieben, daß die Mischung auch noch andere herkömmliche Additive, unter anderem Antioxidantien verschiedener Struktur sowie Phosphite, Phosphonite und Thiopropionsäuren enthalten kann. Ausführungsbeispiele für diese zahlreichen Additive sind nicht vorhanden.

Aus der EP 0 625 542 A2 ist es ferner bekannt, daß man durch eine Kombination von sekundären Antioxidantien aus der Gruppe der Thioester und organischen Phosphite Pfropf-Copolymere vom Typ des ABS stabilisieren kann, wobei auf die phenolischen Antioxidantien verzichtet werden kann, welche in herkömmlichen Mischungen zu einer Eigenverfärbung führen können. Die bevorzugten Verbindungen sind Dilaurylthiodipropionat und Tris-(nonylphenyl)-phosphit. Weiterhin wird erwähnt, daß aus dem japanischen Patent JP 85008710 zur Stabilisierung von ABS auch eine Mischung aus 2,2'-Methylen-bis-(4-methyl-6-tert.-butylphenol) mit Dilaurylthiodipropionat und Distearylpentaerythritoldiphosphit in einer Menge von 0,1 bis 5 Gew.-% bekannt ist.

Aus Taschenbuch der Kunststoff-Additive, s.o., Seite 80-81 ist weiterhin bekannt, daß zur Stabilisierung von ABS ein ternäres Gemisch aus Triethylenglycol-bis-3-(3-tert.-butyl-4-hydroxy-5-methyl-phenyl)-propionat mit Tris-(nonylphenyl)-phosphit und Dilaurylthiodipropionat mit Erfolg eingesetzt worden ist und die Oxidationsbeständigkeit gegenüber Mischungen aus nur zwei dieser Komponenten erhöht.

Obwohl bereits eine Vielzahl von Alterungsschutzmitteln für solche Kunststoffe vorgeschlagen sind, stellt die Alterungsbeständigkeit von Co- und Terpolymeren des Styrols besondere Anforderungen, da die Stabilisierung des ungesättigten Anteils aufgrund seiner besonderen Oxidationsempfindlichkeit entscheidenden Einfluß auf die Produktqualität hat. Die bisher bekannten Alterungsschutzmittel sind nicht optimal, so daß die Aufgabe der vorliegenden Erfindung darin besteht, verbesserte Wirkstoffe zu finden.

Überraschenderweise wurde nunmehr gefunden, daß eine Mischung aus phenolischem Antioxidans, Thioester und Phosphit in besonderem Maße nicht nur gegen Vergilbung, sondern auch gegen eine Schädigung der mechanischen Eigenschaften der obengenannten Thermoplaste wirkt, wenn als phenolische Komponente RALOX^{®} (Marke der Firma Raschig GmbH) LC, als Thioester Dilauryl-3,3'-thiodipropionat oder Distearyl-3,3'-thiodipropionat verwendet wird und als Phosphit Bis-(2,4-di-tert-butylphenyl)pentaerythritoldiphosphit verwendet wird.

Diese Mischung, bei der die einzelnen Bestandteile in einer Menge von 0,01 bis 2 %, vorzugsweise 0,25 bis 1 Gew.-% bezogen auf das Polymere eingesetzt sind, erweist sich nicht nur bezüglich der Vergilbung, sondern auch bezüglich der mechanischen Eigenschaften der Polymere als besonders stark schützend. Insgesamt werden 0,01 bis 5 Gew.-%, vorzugsweise 0,1 bis 3 Gew.-% der Mischung, bezogen auf das Polymere, eingesetzt.

RALOX^{®} LC (CAS Nr. 68610-51-5, butyliertes Reaktionsprodukt aus p-Kresol und Dicyclopentadien) wird hergestellt durch Friedel-Crafts-Reaktion von p-Kresol und Tricyclo-[5.2.1.0]-decadien in einem Molverhältnis von 10 : 1 bis 1 : 5 und anschließende Umsetzung mit Isobuten oder tert.-Butanol oder tert.-Butylchlorid.

Das Produkt entspricht der folgenden Formel I 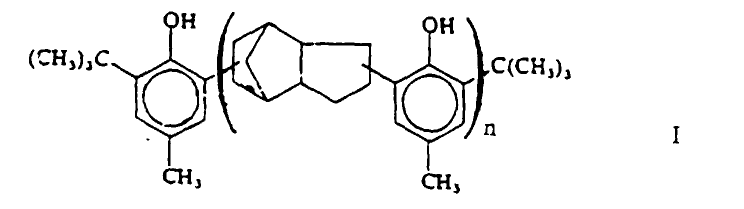 und ist ein Gemisch dieses Oligomers mit n = 1 - 5.

Je nach Molverhältnis der Ausgangsprodukte und Mischungsverhältnis von "n" besitzen die Verbindungen einen Schmelzpunkt zwischen 70 und 140 °C und ein mittleres Molgewicht von 600 bis 800 g/Mol. Sie zeichnen sich durch Schwerflüchtigkeit, gute Verträglichkeit, geringe Migration und hohe Extraktionsbeständigkeit mit ABS, SBS, SIS, PS-I und SAN aus.

Das erfindungsgemäße verwendete Phosphit ist Bis-(2,4-di-tert.-butylphenyl)pentaerythritoldiphosphit. Die erfindungsgemäß eingesetzten Thioester sind Dilauryl-3,3'-thiodipropionat und Distearyl-3,3'-thiodipropionat, die allein oder als Mischungen eingesetzt werden können.

Die erfindungsgemäßen, gegen Verfärbung, thermischen und oxidativen Abbau stabilisierten Massen der obengenannten Thermoplaste können wie folgt hergestellt werden:

Das Kunststoffgranulat, das phenolische Antioxidans, das Phosphit und der Thioester werden bei Raumtemperatur miteinander z. B. in einem Rhönradmischer vermengt und über einen gleichlaufenden Zweischneckenkneter bei Schmelztemperatur des Kunststoffs extrudiert. Die Schmelze wird nach dem Extrudieren im Wasserbad gekühlt, granuliert und getrocknet. Das so hergestellte Halbfertigprodukt kann in üblicher Weise, ohne zusätzliche Stabilisierung, weiterverarbeitet werden.

In den folgenden Beispielen wird die Überlegenheit der erfindungsgemäßen Alterungsschutzmittel gegenüber den aus dem Stand der Technik bekannten Mitteln belegt.

### Beispiel 1

### Stabilisierung von ABS

98,8 g ABS-Granulat (Teluran^{®} VLD, unstabilisiert, BASF AG)
0,5 g RALOX^{®} LC
0,3 g Dilauryl-3,3'-thiodipropionat
0,3 g Bis-(2,4-di-tert.-butylphenyl)pentaerythritoldiphosphit
werden bei Raumtemperatur intensiv miteinander vermengt und anschließend bei 180 bis 250 °C extrudiert, gekühlt und granuliert. Das erhaltene getrocknete Granulat wird zu Normprüfkörpern (S-Stäbe) spritzgegossen und einer Alterung bei 90 °C im Umlufttrockenschrank unterworfen. Die Verfärbung der Prüfkörper wird vor der Alterung, nach 5, 10 und 15 Wochen nach der ClELAB-Farbmeßmethode DIN 6174 gemessen.

Weiterhin wird die Kerbschlagzähigkeit nach Charpy (DIN 53453, DIN ISO 179) zu den gleichen Zeitpunkten bestimmt. Zum Vergleich werden entsprechende Prüfkörper hergestellt und untersucht, die kein Antioxidans bzw. Mischungen des phenolischen Antioxidans mit Phosphit oder Thioester enthalten. Die Untersuchungsergebnisse sind den beigefügten Tabellen 1 und 2 zu entnehmen. Es zeigt sich, daß nur die erfindungsgemäße Mischung sowohl bei der Messung der Verfärbung als auch der Kerbschlagzähigkeit eine herausragende Wirkung aufweist.

**Tabelle 1**

| **Verfärbung** | | | | | | |
|---|---|---|---|---|---|---|
| Idf. Nr. | Antioxidans | * | Alterung bei 90 °C im Umlufttrockenschrank nach x Wochen | | | |
| | | | ohne | 5 | 10 | 15 |
| 1 | ohne | L | 69,9 | 59,1 | 52,8 | 47,5 |
| (Kontrolle) | | a | -0,3 | 7,5 | 13,5 | 18,3 |
| | | b | 13,6 | 48,6 | 55,5 | 56,1 |
| 2 | 0,5 % RALOX^{®} LC | L | 72,3 | 61,2 | 55,1 | 47,3 |
| (Kontrolle) | 0,5 % Ultranox^{®} 626 | a | -1,2 | 6,5 | 10,1 | 14,4 |
| | | b | 13,8 | 33,7 | 36,8 | 43,3 |
| 3 | 0,5 % RALOX^{®} LC | L | 71,8 | 61,5 | 56,2 | 48,3 |
| (Kontrolle) | 0,5 % lrganox^{®} PS 800 | a | -0,9 | 6,6 | 9,8 | 14,3 |
| | | b | 14,08 | 32,6 | 37,3 | 41,9 |
| 4 | 0,5 % RALOX^{®} 630 | L | 73,6 | 65,0 | 58,4 | 51,6 |
| (Kontrolle) | 0,3 % lrganox^{®} PS 800 | a | -1,1 | 5,0 | 8,8 | 12,9 |
| | 0,3 % Ultranox^{®} 626 | b | 16,2 | 29,9 | 35,3 | 39,4 |
| 5 | 0,5 % RALOX^{®} LC | L | 73,9 | 64,9 | 64,5 | 58,5 |
| (erfg. Mischung) | 0,3 % lrganox^{®} PS 800 | a | -1,6 | 5,1 | 4,8 | 7,9 |
| | 0,3 % Ultranox^{®} 626 | b | 15,4 | 30,6 | 27,4 | 32,5 |

| | | | | | | |
|---|---|---|---|---|---|---|
| * L, a und b = Mittelwerte der CIELAB-Farbmessungen | | | | | | |

- RALOX^{®} 630:: Tetrakis-[methylen-(3,5-di-tert.-butyl-4-hydroxyhydrocinnamat)]-methan
- Ultranox^{®} 626:: Bis-(2,4-di-tert.-butylphenyl)pentaerythritoldiphosphit
- Irganox^{®} PS 800:: Dilauryl-3,3'-thiodipropionat

**Tabelle 2**

| **Charpy-Kerbschlagzähigkeit** | | | | | | |
|---|---|---|---|---|---|---|
| Idf. Nr. | Antioxidans | | Alterung bei 90 °C im Umlufttrockenschrank nach x Wochen | | | |
| | | | ohne | 5 | 10 | 15 |
| 1 | ohne | xₘ | 27,6 | 15,4 | 13,9 | 13,1 |
| (Kontrolle) | | % | 100 | 55,8 | 50,3 | 47,5 |
| 2 | 0,5 % RALOX^{®} LC | xₘ | 30,7 | 21,6 | 17,4 | 10,6 |
| (Kontrolle) | 0,5 % Ultranox^{®} 626 | % | 100 | 70,4 | 56,8 | 34,7 |
| 3 | 0,5 % RALOX^{®} LC | xₘ | 31,5 | 22,0 | 18,9 | 12,8 |
| (Kontrolle) | 0,5 % lrganox^{®} PS 800 | % | 100 | 69,9 | 59,9 | 40,5 |
| 4 | 0,5 % RALOX^{®} 630 | xₘ | 31,4 | 23,1 | 19,7 | 15,5 |
| (Kontrolle) | 0,3 % lrganox^{®} PS 800 0,3 % Ultranox^{®} 626 | % | 100 | 73,4 | 62,7 | 49,4 |
| 5 | 0,5 % RALOX^{®} LC | xₘ | 31,6 | 22,3 | 22,2 | 20,8 |
| (erfg. Mischung) | 0,3 % lrganox^{®} PS 800 | % | 100 | 70,6 | 70,3 | 65,8 |
| | 0,3 % Ultranox^{®} 626 | | | | | |
| xₘ = Mittelwerte der Kerbschlagversuche in [mJ/mm²] | | | | | | |
| % = prozentuale Abnahme der Kerbschlagzähigkeit bezogen auf die ungealterte Probe (ungealtert = 100 %) | | | | | | |

## Patentansprüche

1. Alterungsschutzmittel für Co- und Terpolymere des Stryrols, bestehend aus Mischungen von sterisch gehinderten Phenolen, Thioestern und Phosphiten, **dadurch gekennzeichnet**, daß als sterisch gehindertes Phenol eine Verbindung der Formel I 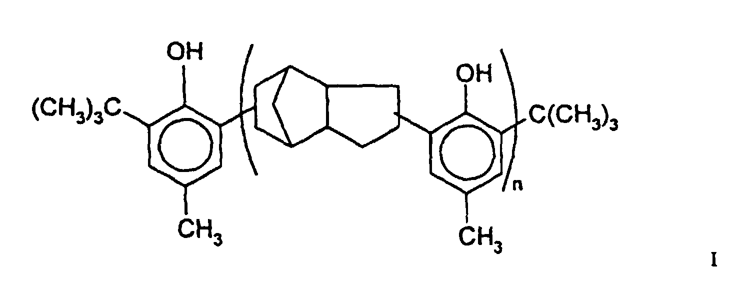 wobei n 1 - 5 bedeutet,
als Thioester Dilauryl-3,3'-thiodipropionat oder Distearyl-3,3'-thiodipropionat, und als Phosphit Bis-(2,4-di-tert-butylphenyl)pentaerythritoldiphosphit verwendet wird.

2. Alterungsschutzmittel gemäß Anspruch 1, **dadurch gekennzeichnet**, daß das Mischungsverhältnis von Phenol zu Phosphit und Thioester 1:0,1 bis 10:0,1-10 beträgt.

3. Alterungsschutzmittel gemäß einem der Ansprüche 1 oder 2, **dadurch gekennzeichnet**, daß das Verhältnis von Phenol zu Phosphit und Thioester 1:0,5 bis 1:0,5-1 beträgt.

4. Co- und Terpolymere des Styrols, **gekennzeichnet durch** einen Gehalt von 0,01 bis 5 Gew.-% eines Alterungsschutzmittels gemäß einem der Ansprüche 1 bis 3.

5. Co- und Terpolymere des Styrols gemäß Anspruch 4, mit einem Gehalt von 0,1 bis 3 Gew.-% des Alterungsschutzmittels.

6. Co- und Terpolymere des Styrols gemäß den Ansprüchen 4 und 5, **dadurch gekennzeichnet**, daß die weiteren Monomere ausgewählt sind aus Acrylnitril, Butadien und Isopren.

## Claims

1. Aging protection agent for co- and terpolymers of styrene consisting of a mixture of stericly-hindered phenols, thioesters and phosphites, characterised in that, as stericly hindered phenol, there is used a compound of the formula I 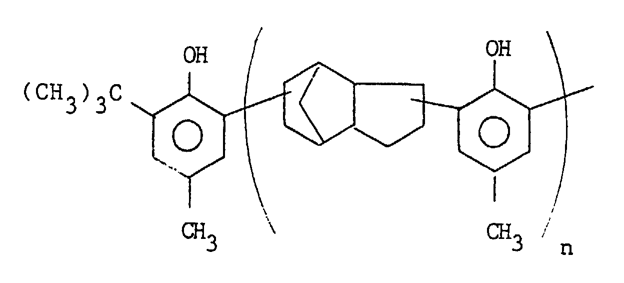 whereby n signifies 1 - 5, as thioester dilauryl-3,3'-thiodipropionate or distearyl-3,3'-thiodipropionate and as phosphite bis-(2,4-di-tert-butylphenyl)-pentaerythritol diphosphite.

2. Aging protection agent according to claim 1, characterised in that the mixing ratio of phenol to phosphite to thioester amounts to 1:0.1 to 10:1-10.

3. Aging protection agent according to claim 1 or 2, characterised in that the ratio of phenol to phosphite to thioester amounts to 1:0.5 to 1:0.5:1.

4. Co- and terpolymers of styrene, characterised by a content of 0.01 to 5 wt.% of an aging protection agent according to claims 1 to 3.

5. Co- and terpolymers of styrene according to claim 4 with a content of 0.1 to 3 wt.% of the aging protection agent.

6. Co- and terpolymers of styrene according to claims 4 and 5, characterised in that the further monomers are selected from acrylonitrile, butadiene and isoprene.

## Revendications

1. Agent de protection contre le vieillissement pour des copolymères et des terpolymères du styrène, constitué par des mélanges de phénols à empêchement stérique, de thioesters et de phosphites, caractérisé en ce qu'on utilise, à titre de phénol à empêchement stérique, un composé répondant à la formule I 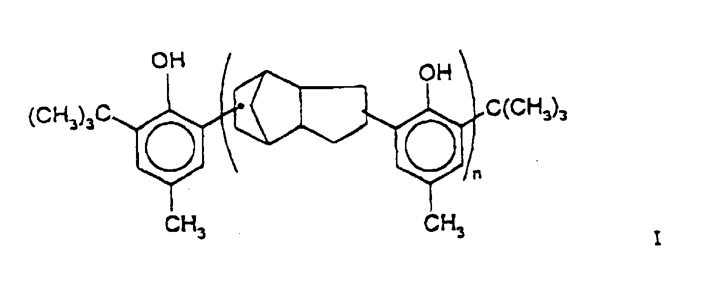 dans laquelle n représente de 1 à 5,
à titre de thioester, le 3,3'-thiodipropionate de dilauryle ou le 3,3'-thiodipropionate de distéaryle et, à titre de phosphite, le bis-(2,4-di-tert-butylphényl)pentaérythritoldiphosphite.

2. Agent de protection contre le vieillissement selon la revendication 1, caractérisé en ce que le rapport de mélange du phénol au phosphite et au thioester s'élève de 1:0,1 à 10:0,1-10.

3. Agent de protection contre le vieillissement selon la revendication 1 ou 2, caractérisé en ce que le rapport du phénol au phosphite et au thioester s'élève de 1:0,5 à 1:0,5-1.

4. Copolymères et terpolymères du styrène caractérisés par une teneur de 0,01 à 5% en poids en agent de protection contre le vieillissement selon l'une quelconque des revendications 1 à 3.

5. Copolymères et terpolymères du styrène selon la revendication 4, possédant l'agent de protection contre le vieillissement en une teneur de 0,1 à 3% en poids.

6. Copolymères et terpolymères du styrène selon les revendications 4 et 5, caractérisés en ce que les monomères supplémentaires sont choisis parmi le groupe comprenant l'acrylonitrile, le butadiène et l'isoprène.
